# EUROPEAN PATENT SPECIFICATION

(11) **EP 0 939 571 B1**
(45) Date of publication and mention of the grant of the patent: **09.05.2007**
(21) Application number: 98103449.9
(22) Date of filing: 27.02.1998
(51) Int. Cl.: H04Q 11/00

(54) **Authentication method and authentication device for secured communications between an ATM mobile terminal and an ATM access node of a wireless ATM radio communication network**
Verfahren und Vorrichtung zur Authentifizierung für gesichterte Übertragungen zwischen einem mobilen ATM Endgerät und einem ATM Zugriffsknoten in einem drahtlosen ATM Funkkommunikationsnetzwerk
Procédé et dispositif d'authentification pour des communications securisées entre un terminal mobile ATM et un noeud d'accès ATM d'un réseau de communication radio ATM sans fils

(43) Date of publication of application: 01.09.1999
(73) Proprietor: TELEFONAKTIEBOLAGET LM ERICSSON (publ), 164 83 Stockholm (SE)
(72) Inventor: Keller, Ralf, 52146 Würselen (DE); Wrona, Konrad, 52134 Herzogenrath (DE)
(74) Representative: von Fischern, Bernhard

(56) References cited:
- EP-A- 0 800 298
- EP-A- 0 813 346
- US-A- 5 539 744

## Description

### Field of the Invention

The invention relates to a method for setting up a secured communication between an ATM mobile terminal and an ATM access node of a wireless ATM radio communication network. Furthermore, the invention relates to an authentication device for such a wireless ATM radio communication network. The invention also relates to the ATM access node of such a wireless ATM radio communication network. Furthermore, the invention relates to an ATM mobile terminal usable within such a wireless ATM radio communication network.

In wireless ATM radio communication networks, generally two steps must be performed in order to connect an ATM mobile terminal to an ATM access node, namely an authentication step where authentication information is exchanged between the mobile terminal and the access node, and a second step in which the wireless connection is set up and in which a secret ciphering key is agreed upon (which is used in an encryption procedure to encrypt the data to be transmitted) such that the wireless ATM connection has a high degree of confidentiality. The exchange of authentication information and the setting up of the wireless connection with the agreed confidentiality key requires the exchange of signals between the mobile terminal and the access node according to a predefined protocol.

Some protocols allow the exchange of the shared authentication information prior to setting up the wireless connection with the session key. However, as will be explained below, there are some protocols a session needs to be first established and only then the secret shared authentication information can be made available. This drawback is very significant, if for example a first signaling protocol is used on the wireless link between the mobile terminal and the access node and another protocol is used between the access node of the ATM communication network and an access node of other interconnected fixed networks.

The invention in particular relates to the establishment of a secure ATM wireless connection between the ATM mobile terminal and the ATM access node for the case where different signaling protocols are used.

Such a wireless ATM connection can be found for example in document EP 0 813 346.

### Background of the Invention

Wireless ATM systems are currently standardized within both the ETSI project BRAN and the ATM Forum Wireless ATM group. Examples of such wireless ATM systems are for example an ATM wireless access communication system (AWACS system), a wireless professional and residential multimedia applications (MEDIAN application) for indoor customer premises networks, the Magic WAND demonstrator (wireless ATM network demonstrator) for indoor and outdoor applications in customer premises and public networks, the SAMBA system, an ATM based mobile system like a broadband mobile communication for multimedia on ATM-basis supported by the German Ministry for Research and Education, or a high performance radio local area network (HIPERLAN system) etc.

Each of the aforementioned wireless ATM systems is defined for specific different application areas. Some of them are for example designed for wireless local area networks (LANs) or to the extension or replacement of fixed LANs. Other systems are specifically designed for broadband access (e.g. to UMTS or to the GSM or GPRS core networks) or to point-to-multipoint systems.

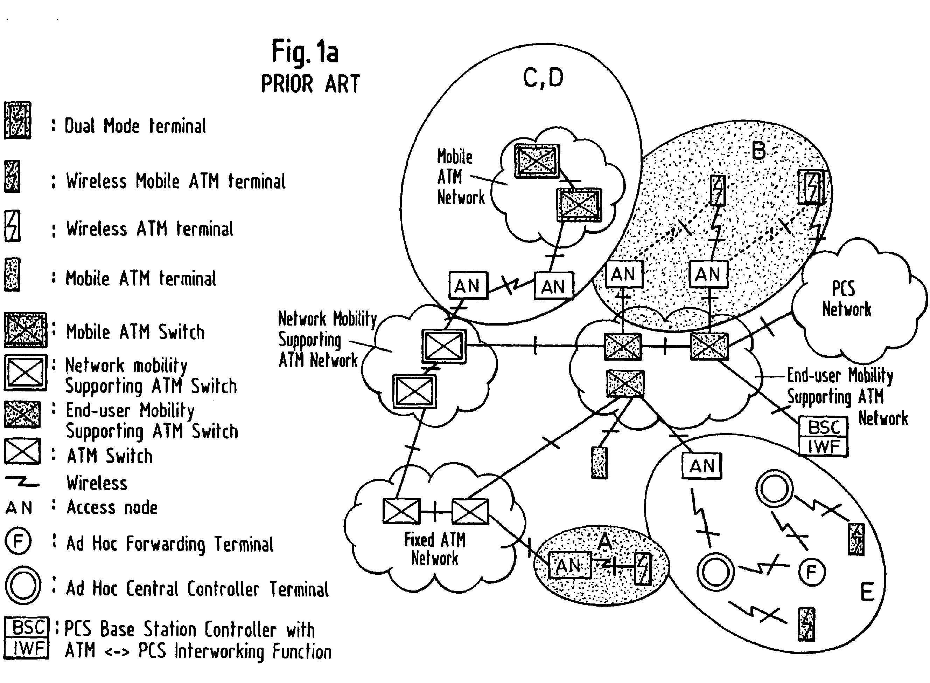

A general configuration of interacting networks including wireless ATM systems is shown in the attached Fig. 1a. Such systems are currently investigated in the aforementioned standardizing committees. As is seen in Fig. 1a, several different types of networks are interconnected through access nodes AN (also called access points). The network A may be provided for fixed wireless components communicating through a wireless channel (e.g. through fixed wireless LANs and a network access via microwave links). The network B may comprise mobile end users communicating directly with the fixed network switching elements (e.g. digital cellular telephony, PCS, wireless LAN). The networks C, D may represent mobile switches with fixed end users where the end users have a fixed connection (either wired or wireless) to a switch. The switch and the end user, as a unit, are mobile, with the switch having a wired or wireless connection to fixed network switching elements (e.g. to a fixed network on board of a passenger plane, military aircraft or navel vessel). Furthermore, in the network D mobile switches with mobile end users may be provided, i.e. the mobile terminals establish connections with switches which are themselves mobile and which then establish a connection to a fixed network, as is the case e.g. in LEO satellite based switching to mobile stations, wireless end user devices; wireless connection to mobile switches on emergency or military vehicles). Another example is shown at E, which is summarized as wireless ad hoc networks. Here, wireless networks are provided, when there is no access node available (e.g. laptops gathered together in a business conferencing environment). It also considers cases where access nodes cannot be placed at arbitrary locations and where plug-and-play and network flexibility are important considerations (e.g. for a residential user). This requirement can be met by supporting auto-configuration of a wireless ATM network. Both mobile end users and fixed wireless end users are possible. Ad hoc networks can also extend the coverage of existing access-node-orientated networks by wireless means by use of forwarding nodes, which act as intermediate relay points (transfer nodes) and forward ATM packets from one WATM radio frequency to another WATM radio frequency. It is envisaged that in the initial stage a wireless ATM system will use an operating frequency of 5 GHz and a available user data rate of 25 Mbit/s. The estimated cell range will be between 30 - 50 m indoors and 200 - 300 m outdoors.

As shown in Fig. 1a, there are various possibilities how mobile ATM (asynchronous transmission mode) networks may be interconnected through the access nodes AN and, since the communication connections are ATM connections and are wireless, the security aspect is an important consideration in such a network architecture. In particular, the inter-operability with security mechanisms of other networks is an important aspect. Also simplicity of upgrading and adding new functionalities is very important, especially as it is impossible to prove that any of the existing practical cryptosystems cannot be broken in future, due to the progress in mathematical theory and development of new more efficient algorithms.

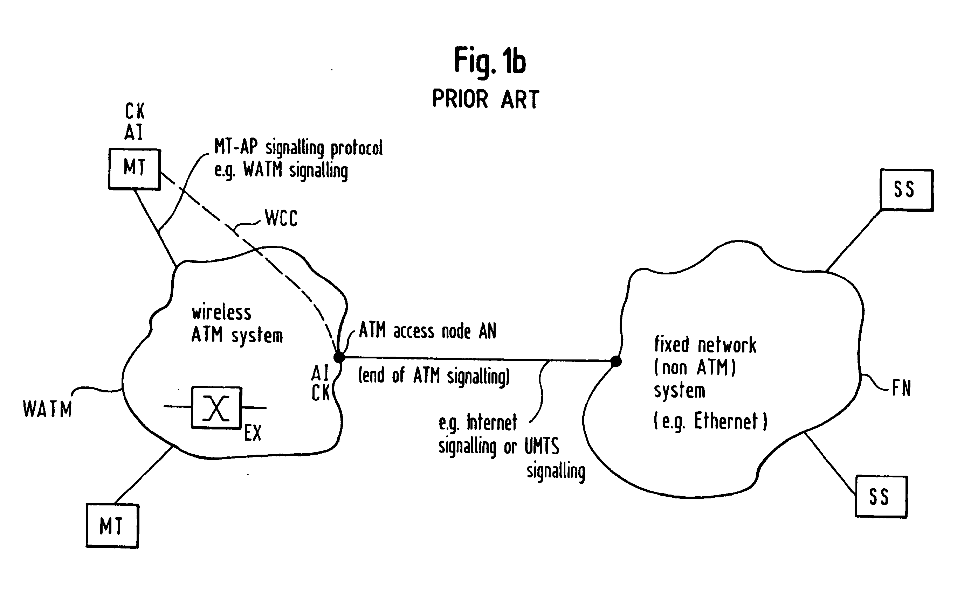

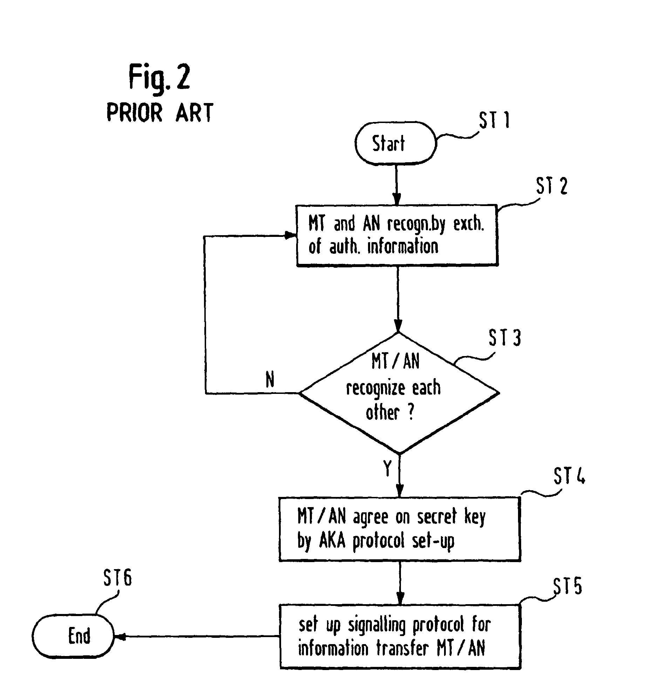

Therefore, as explained above, several steps have to be performed before a secure ATM connection in the wireless ATM communication network can be guaranteed. This will be explained below with reference to Fig. 1b and Fig. 2.

### Conventional authentication procedure

Fig. 1b shows a simplified network configuration according to Fig. 1a for explanation purposes. Fig. 1b represents a typical case when the wireless ATM system is a wireless LAN or a broadband access system, where it is desirable that a wireless ATM radio communication network WATM is to be connected to a fixed non-ATM system, for example to an Ethernet via access nodes AN of the WATM system and the FN system. Typically, the Ethernet only supports one secure association establishment protocol.

However, in Fig. 1b the Ethernet is only taken as an example for the non-ATM fixed network and it may be useful to connect a general wireless ATM radio communication network WATM to a network system through access nodes AN, wherein the network system can perform different secure association establishment procedures. Of course, this implies that a signaling gateway is established between the network system and the WATM system.

As is also shown in Fig. 1b, a wireless communication connection WCC is set-up between the ATM mobile terminal MT and the ATM access node AN and the ATM signaling is thus terminated in the access node AN. It is generally difficult to design services within the WATM system if these services should rely on functions and services in the fixed networks exactly because the ATM signaling is terminated in the access point AN.

With the access node AN clearly being the entry point into the WATM system, it is obvious that the access node AN has to be protected against fraudulent and accidental misuse, such that not any subscriber can have access to the WATM system. As explained before, this is done by a two step mechanism, namely an authentication mechanism where the mobile station MT and the access node AM must recognize each other, and a second step where encryption methods are used on the radio link to provide a confidentiality level on the radio link. Thus, not any arbitrary subscriber station SS, for example from the fixed network SN, should gain an access and should be supported in the WATM system, but only such subscriber stations for mobile stations which are recognized by the WATM system.

When a mobile terminal MT desires an access to the WATM system or requires a registration, the following two types of registrations can be distinguished:
1. The access node AN and the ATM mobile terminal MT must possess a secret authentication information AI and the authentication information must be the same in the access node AN and in the mobile terminal MT. Such an authentication information may typically be an authentication key or a challenge/response information.
2. The ATM mobile terminal MT and the access node AN "don't know each other"; i.e. they cannot recognize each other.

In both cases, communication keys (encryption/decryption keys) have to be generated and exchanged between the mobile terminal MT and the access node AN in any case. These communication keys CK are used to achieve a confidentially of the information transmitted on the wireless ATM connection. Protocols which are used to generate and exchange such communication keys CK are generally called "key agreement protocols" and in existing networks like GSM, DECT, IS-54, IS 95 and CDPD, they are combined with the subscriber authentication, thus building a so-called "atomic authentication and key agreement (AKA) protocol".

Generally, there are two categories of AKA protocols that can be used for setting up the communication between the ATM mobile terminal MT and the ATM access node AN. Namely, the first category comprises for example the usage of the Diffie-Hellman encrypted key exchange (DH-EKE) protocol or the simple key exponential key exchange (SPEKE) protocol (see e.g. reference [1]: B. Schneier, "Applied Cryptography, Second Edition, Wiley, 1992" and reference [2]: D. Jablon "Strong Passwork only Authenticated Key Exchange, ACM Computer Communication Review, October 1996"). A typical flow chart of how a secured communication between ATM mobile terminal MT and an ATM access node AN of a wireless ATM radio communication network WATM using this kind of protocol is achieved, is illustrated in Fig. 2.

In Fig. 2, the mobile terminal MT and the access node AN exchange authentication information in step ST2 after starting the setup procedure in step ST1. In ST3 it is checked whether the mobile terminal MT and the access point AP recognize each other, i.e. whether the access node AN have stored an authentication information which coincides with that sent by the mobile terminal MT. It this is not so, "N" in step ST3, the exchange of authentication information is repeated in step ST2. If the mobile terminal MT and the access point AM use the same authentication information, "Y" in step ST3, then the MT and the access node AN agree on a secrete ciphering key in step ST4 (using the AKA protocol). If MT/AN have agreed on a secret session key (communication or ciphering key) in step ST4, then a secure wireless ATM communication connection WCC has been established and the usual communication signaling protocol for information transfer can be setup in step ST5. The setup procedure comes to an end in step ST6.

Therefore, using the conventional Diffie or Diffie-Hellman encrypted key exchange (DH-EKE) or the simple key exponential key exchange (SPEKE) protocol, the authentication information AI is in fact established before completing the AKA protocol. However, there is a second category of AKA protocols, where the secret shared authentication information is not available before setting up the wireless communication connection WCC based on the agreed session encryption keys. That is, using protocols of the second category means that the shared authentication information only becomes available after, the secured communication connection has been set up.

As is illustrated in Fig. 1b, the situation becomes even more difficult if different signaling protocols are used on the wireless ATM communication connection WCC between the mobile terminal MT and the access node AN (i.e. an WATM signaling) and between the access node AN of the WATM network and the access nodes AN of the fixed networks SN, for example an internet signaling or an UMTS signaling. That is, if the access of the AN of the WATM communication network should be flexible enough to interconnect to different signaling protocols (for example internet signaling or UMTS signaling) then different authentication procedures or different AKA protocols may have to be used dependent on the used protocol between the ATM system and the fixed network FN. Therefore, sometimes the category 1 AKA protocol may have to be used and some times the category 2 AKA protocol may have to be used. Thus, in some cases the authentication information may not be available before setting up the encrypted ATM wireless communication connection WCC.

### Summary of the Invention

As described above, the problem with setting up ATM wireless communication connections between a ATM mobile terminal and a ATM access node essentially resides in the fact, that either different kinds of AKA protocols are to be set up to the access node or that in fact the authentication information is not available prior to completing the AKA protocol.

Therefore, the object of the present invention is to provide a method, an authentication device, an ATM access node, an ATM mobile terminal as well as a ATM communication system, in which a secure communication between a ATM mobile terminal and an ATM access node can be established.

A secure communication is preferably to be established even if the authentication information is not available when completing the protocol or if various different AKA protocols are to be used on the access node or if security mechanisms of other interconnected networks are to be used.

### Solution of the Object

Essentially this object is solved by a method for setting up a secured communication between an ATM mobile terminal and an ATM access node of a wireless ATM radio communication network, comprising the step of setting up a wireless ATM radio communication connection between said ATM mobile terminal and said ATM access node without performing an authentication information checking procedure therebefore, wherein an information exchange on said wireless ATM radio communication connnection is performed by using a secret communication key agreed upon by said ATM access node and said ATM mobile terminal.

Furthermore, this object is solved by an authentication device, in particular for a wireless ATM radio communication network, comprising, an authentication information storage means for storing a plurality of authentication informations each corresponding to a respective ATM mobile terminal served by a wireless ATM radio communication network, and an authentication information transmisssion means for issuing an authentication information in reponse to receiving an authentication information request from an ATM mobile terminal after a ATM wireless radio communication connection has been setup between said requesting ATM mobile terminal and said ATM access node using a secret communication key agreed upon by said ATM access node and said ATM mobile terminal.

The object is also solved by an ATM access node of a wireless ATM communication network for setting up a secured wireless ATM communication connection to an ATM mobile terminal, said ATM access node comprising, a setup means for setting up a wireless ATM radio communication connection to said ATM mobile terminal without performing an authentication information checking procedure therebefore, a secret communication key storage means for storing a secret communication key used by said ATM mobile terminal and said ATM access node for performing wireless ATM communications.

Furthermore, the object is solved by an ATM mobile terminal for setting up a secured communication to an ATM access node of a wireless ATM communication network, comprising, a setup means for setting up a wireless ATM radio communication connection to said ATM access node without performing an authentication information checking procedure therebefore, a secret communication key storage means for storing a secret communication key used by said ATM mobile terminal and said ATM access node for performing wireless ATM communications.

Finally, the object is also solved by an ATM wireless communication network according to claim 32.

The basic idea of the invention is to provide user chosen confidentiality level on the radio link by means of setting up a secure association between the WATM access node and the wireless ATM mobile terminal without using an authentication as a first step. That is, according to the invention, a wireless ATM radio communication connection is established by agreeing upon a secret communication key CK between the ATM access node and the ATM mobile terminal, wherein no authentication information checking procedure is performed therebefore.

Another aspect of the invention is that once the secured wireless ATM radio communication connection has been established between the mobile terminal and the access node, the mobile terminal tries to get the secret shared authentication information by use of higher level protocols communication from an authentication device provided in the wireless ATM communication network or provided in a network which is connected to the access node (with which the mobile terminal has setup the secure ciphered communication link) through a signalling path. This authentication device comprises an authentication information search means for storing a plurality of authentication informations each corresponding to a respective ATM mobile terminal served by said wireless ATM radio communication network. When the ATM communication connection has been set up, the mobile terminal requests an authentication information from this authentication device and only then an authentication procedure is performed at the access node with the authentication information being provided by the authentication device.

Another aspect of the invention is that the mobile terminal must receive the secret shared authentication information from the authentication device within a predefined period or within a period which has been negotiated between the mobile terminal and the access node. If the mobile terminal receives the secret shared authentication information within this period, then it either authenticates itself at the access node or this task is being taken care of by the authentication device which initially provided the authentication information.

If the time runs out, i.e. if the mobile terminal cannot authenticate itself at the access node within the predefined time period, then the already setup wireless ATM radio communication connection is interrupted (closed) and information regarding the mobile terminal (which has unsuccessfully attempted an authentication) is stored in the access node. Preferably, if the same mobile terminal has already failed an authentication a predetermined number of times, then further access requests from this mobile terminal are immediately rejected by the access node.

Preferably, before the authentication procedure is performed at the access node, the mobile terminal (the user) can choose a predetermined communication key (confidentiality level) to be used on the wireless ATM communication connection. Thus, the user or the user application itself can choose the degree of confidentiality which it desires on the wireless communication connection.

If the authentication device is located or part of the WATM system a signalling path is established through the access node to the authentication device in order to request the authentication information. This information is then preferably transferred back to the mobile terminal through the already setup ciphered communication link.

If the authentication device is located or part of another network connected to the access node via a communication link, depending on the type of WATM network and the type of the connected network, a signalling path is setup to the authentication device through the access node to request the authentication information. Preferably, this authentication information is again transferred back to the mobile terminal along the already setup communication (ciphered) channel.

Further advantageous embodiments and improvements of the invention may be taken from the dependent claims. Hereinafter, the invention will be described with reference to its advantageous embodiments and the attached drawings.

### Brief Description of the Drawings

In the drawings:
- Fig. 1a: shows a principle overview of possible network configurations including a wireless ATM network;
- Fig. 1b: shows an example where a wireless ATM system WATM is connected to a fixed network FN through access nodes AN;
- Fig. 2: shows a conventional method to setup a secured communication between ATM mobile terminal and an ATM access node;
- Fig. 3: shows an authentication device SSD, an access node AN and a mobile terminal MT according to the invention;
- Fig. 4: shows a principle flowchart of the method according to the invention;
- Fig. 5: shows a more detailed flowchart of setting up a secured communication according to the invention.

### Principle of the Invention

As explained before, one of the big disadvantages of the existing secret-based AKA protocols is that the shared authentication information has to be established between the mobile terminal MT and the access node AN prior to completing the protocol. However, when different signaling protocols are used on the wireless link between the mobile terminal MT and the access node AN (WATM signaling) and between the access node AN and other fixed network nodes, (e.g. internet signaling) then the setup of shared secret knowledge prior to secure association might be extremely difficult. This happens also when the access node AN is not connected to a fixed ATN network. In such case, some protocols might be used (e.g. Diffie-Hellman) to build out a temporary security association between AN and NT, i.e. to setup shared secret keys for radio link encryption. After setting a secure channel a regular end-to-end authentication might be done.

According to the invention a method is established that provides a user chosen confidentiality level on the radio link by means of setting up a secure association between the WATM access point and the wireless ATM terminal without any authentication in the first run. After the secure association has been established, for example using an unauthenticated variant of the conventional protocol, the mobile terminal MT tries to get the secret shared authentication information by communicating with an authentication device (also called a security server) in the WATM network (or in fact in an interconnected fixed network) through a communication (signalling) channel setup means of a higher level protocol. The transfer of the authentication information then takes place along the already setup ciphered communication channel.

If the mobile terminal gets to secret shared authentication information within a predefined or negotiated period, it performs an authentication itself at the access node AN. This authentication procedure can be accomplished using either an authenticated variant of the flexible AKA protocol or other mechanisms. Otherwise, the respective timer in the access node AN runs out and the access AN closes to wireless connected to the mobile terminal MT. Attacks of fraudulent or accidental misuse can be prevented to some extent by storing the MAC address or other suitable information about the mobile terminal MT within the access point AN. After N unsuccessful connection setups further access requests from this mobile terminal MT are immediately rejected by the access node AN.

Therefore, whilst all AKA protocols in the prior art use an authentication procedure before setting up the actual wireless ATM communication connection, one of the basic principles of the invention is based on the idea to first setup the wireless ATM communication between the mobile terminal MT and the access node AN by selecting and agreeing upon a common encryption communication key and only thereafter possibly an authentication is performed.

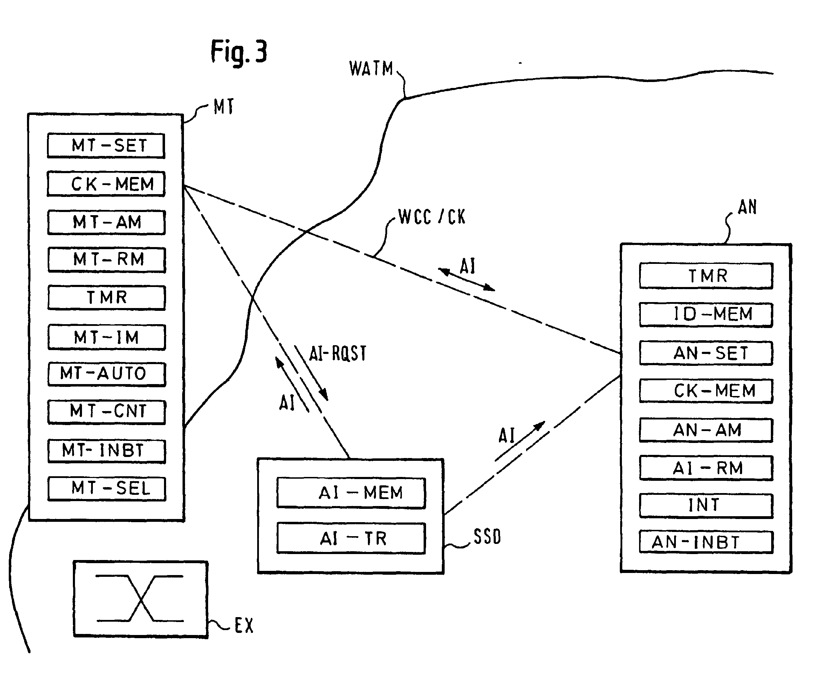

Embodiments of the mobile terminal MT, access node AN and the authentication device of the WATM system performing such a function are described below with reference to Fig. 3. It should be understood that Fig. 3 in principle corresponds to Fig. 1b, i.e. a plurality of mobile terminals MT are connected to a wireless ATM system and a wireless secured ATM communication connection WCC is to be set up between the mobile terminals MT and the access node AN.

### Embodiment of the mobile terminal MT/Access node AN

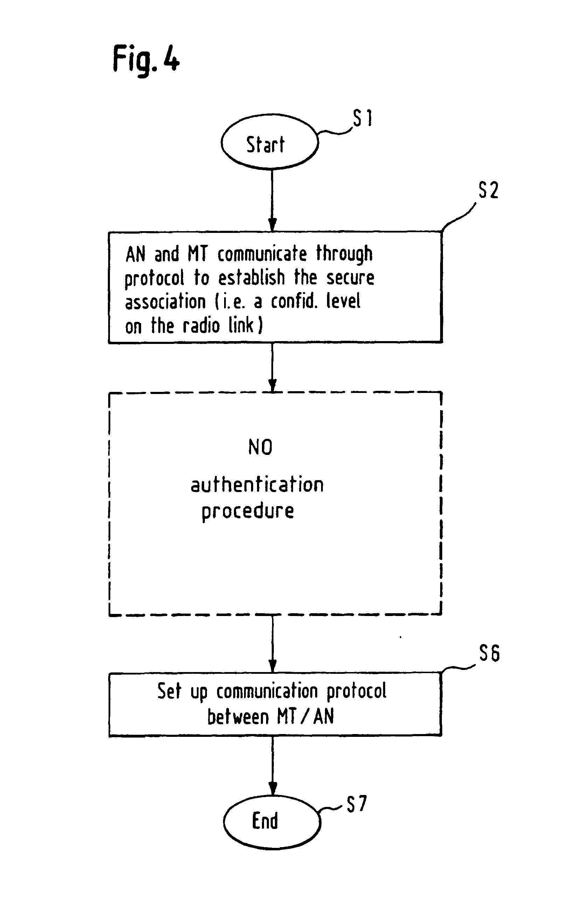

Hereinafter, the functions performed by the mobile terminal MT and the access node AN according to the invention as shown in Fig. 3 will be illustrated with reference to the communication connection setup method as shown in Fig. 4.

In Fig. 3 the ATM mobile terminal MT comprises a setup means MT-SET for setting up a wireless ATM radio communication connection WCC to said ATM access node AN. Likewise, the access AN comprises a setup means AN-SET for setting up the wireless ATM radio communication connection WCC to said ATM mobile terminal MT. In the mobile terminal MT and the access node AN a respective secret communication key KC storage means CK-MEM stores a secret communication key CK used by said ATM mobile terminal MT and said ATM access node AL for performing wireless ATM communications. After starting the setup procedure in step S1 in Fig. 4, the setup means MT-SET of the mobile terminal MT sends a setup request to the access node AN by means of a protocol, to setup a secure association, i.e. a secured wireless ATM radio communication connection WCC to said setup means AN-SET of the access node AN. As is seen in Fig. 4, there is no authentication procedure before or after the setting up procedure in S2. That is, in step S2 a fully operable (i.e. usable for data transfer) and ciphered wireless ATM radio communication link is setup which uses a secret communication key CK, (i.e. a confidentiality level or encryption key) which has been agreed upon by said ATM mobile terminal MT and said ATM access node AN for performing wireless ATM communications.

In step S2, a secrete key selection means MT-SEL of said mobile terminal MT can preferably predefine or select one of a plurality of secret communication keys CK stored in the secret communication key storage means CK-MEM within the mobile terminal MT. That is, in step S2, the user or the user application can predefine a desired confidentiality level on the wireless ATM radio communication connection WCC.

First, in step S2 a user chosen confidentiality level can preferably be provided on the radio link by means of setting up a secure association between the WATM access node AN and the wireless ATM mobile terminal without an authentication in the first run. Thus, by contrast to the category 1 AKA protocols, the protocol illustrated in fig. 4 does not require the setup of shared authentication information between the mobile terminal MT and the access node AN prior to completion of the protocol. The procedure is also applicable to category 2 protocols, because there is yet again no necessity to setup the secret shared authentication information before setting up the security association (i.e. the encryption key). Thus, the procedure in Fig. 4 is intrinsically different to what was described above for the category 1, category 2 setup protocols, since an authentication information agreement is not necessary before setting up of the operable wireless ATM radio communication connection WCC.

After step S2 immediately the real communication protocol for information transfer between MT/AN can be set up in step S6 whereafter the setup procedure comes to an end in step S7.

### Inclusion of the Authentication Information

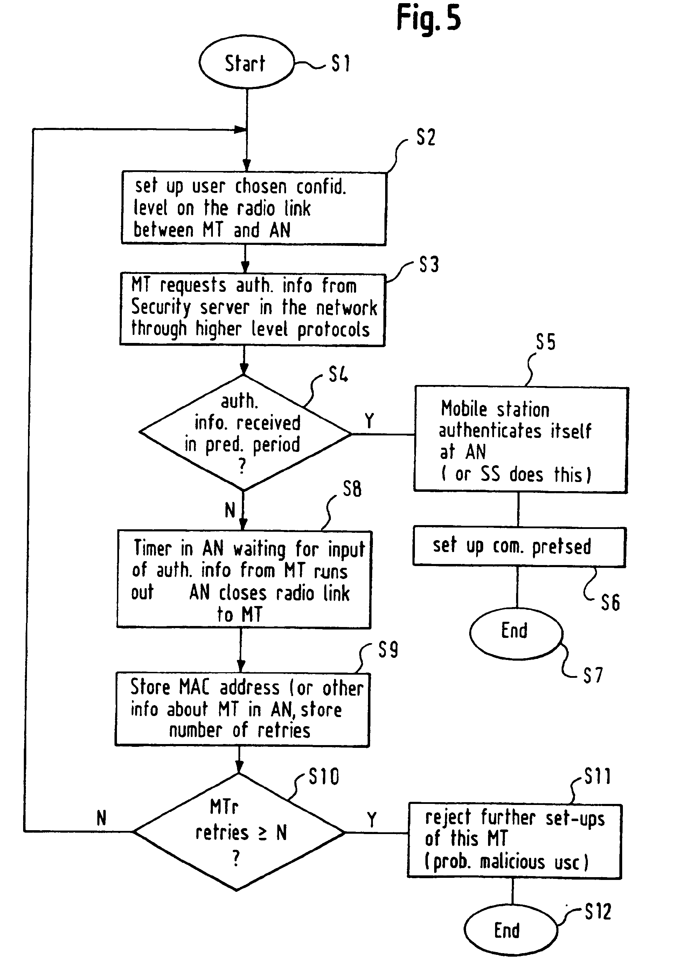

Whilst there is no necessity to perform an authentication before the setup of the communication channel WCC in Fig. 3, 4, preferably such an authentication procedure may be carried out after step S2, as is shown in more detail in the flow chart in Fig. 5.

To realize this authentication procedure, the wireless ATM network WATM (or any interconnected non-ATM or ATM fixed network) preferably comprises an authentication device SSD comprising an authentication information storage AI-MEM for storing a plurality of authentication informations AI each corresponding to a respective ATM mobile terminal MT served by said wireless ATM radio communication network WATM. Furthermore, the device SSD comprises an authentication information transmission means TR for issuing an authentication information AI in response to receiving an authentication information request AI-RQST from an ATM mobile terminal MT after said ATM wireless radio communication connection WCC has been setup between the ATM mobile terminal MT and said ATM access node AN.

Instead of just exchanging authentication information between MT and AN, an authentication means MT-AN of the mobile terminal MT requests an authentication information from the authentication device SSD (hereinafter also called a security server) of the WATM network (or the interconnected fixed network FN) through higher layer protocols in step S3. This request message is denoted AI-RQST in Fig. 3. In response to said request message AI-RQST, the security server SSD reads out from the memory AI-MEM an authentication information corresponding to the mobile terminal MT requesting such information. It the requesting mobile terminal MT is an admitted (subscribed) mobile terminal MT, then the security server SSD should have an entry for this mobile terminal MT in the memory AI-MEM.

In response to such a request AI-RQST the mobile terminal MT is authenticated at the access node AN. This can take place either by the security server SSD transferring the requested authentication information AI directly to the access node AN or alternatively the security server SSD returns the authentication information AI to the mobile terminal MT via the already established secured (ciphered) communication channel WCC. At the mobile terminal the authentication information AI is received in an authentication information reception means MT-RM.

Having established the secured communication connection WCC between the mobile terminal MT and the access node AN authentication information AI provided by an authentication device SSD located within the WATM system or even an interconnected network can now be transferred back to the mobile terminal MT in a secured or ciphered manner through the communication connection WCC.

Then the mobile terminal MT itself performs the authentication procedure with the access node AN by transferring the received authentication information AI to the access node AN. In both scenarios, the ATM mobile terminal MT is authenticated at the ATM access node by means of the transfer of the authentication information AI which identifies the ATM mobile terminal MT at the ATM access node AN. Therefore, if an authentication information reception means AI-RM in the access node AN receives an authentication information AI, an authentication means AN-RN in said ATM access node AN performs the authentication of the ATM mobile terminal MT when the received authentication information AI is one that identifies the requesting ATM mobile terminal MT as an admitted ATM mobile terminal MT.

Therefore, no matter where to the authentication information transmission means AI-TR of the security server SSD transmits the authentication information AI, an authentication procedure can always be performed successfully in step S5 if the authentication information AI is one that is recognized by said access node AN. That is, an authentication means MT-AN of said ATM mobile terminal can send an authentication information request message AI-RQST in step S3 in Fig. 5 to the network authentication device SSD and an authentication information reception means MT-RM receives that authentication information AI from said network authentication device SSD in response to the request message. Alternatively, the access node authentication means AN-AM performs the authentication on the basis of authentication information received from the security server directly.

Preferably, after the access node AN has finalized the setup of the wireless communication connection WCC to said mobile terminal MT, a timer TMR in said access node AN can be set in step S2 in Fig. 5. Preferably, the timer TMR in AN sets a predetermined time period in which an authentication information reception by AI-RM in AN is expected. Therefore, independently as to whether the authentication information AI is transmitted by the security server SSD or the mobile terminal MT itself, in step S4 a determination is made by the timer TMR in AN as to whether or not the authentic information AI has been received in a predetermined time period. If it has been received, "Y" in step S4 in Fig. 5, then the normal authentication procedure can be performed in step S5. If "N" in step S4, then the timer TMR in AN waiting for the input of the authentication information from MT (directly or through SSD) runs out. In this case, the previously setup wireless ATM communication connection WCC is closed in step S8 by an interrupt means INT in AN .

Preferably, an identity memory ID-MEM stores an identity information II, MAC of the ATM mobile terminal MT whose communication connection WCC has been released (closed). The identity information can for example be the MAC address of the requesting mobile terminal MT (MAC: Mobile Access Code).

Furthermore, if the access node AN recognizes that the mobile terminal MT presently requesting an authentication has already previously been trying to setup a communication to the access node AN, also the number of retries MTr can be compared with a maximum number of retries N in step S10. If the same mobile terminal MT has requested an authentication more than N times, then an access node inhibition means AN-INBT will completely inhibit or reject any further setup requests from this mobile terminal MT in step S11, whereafter the procedure comes to an end in step S12.

The interrupt means INT in the ATM access node AN is responsible for closing an already set up secure wireless radio communication WCC, if said authentication information reception means AI-RM does nor receive the authentication information from MT within the predetermined time period as is determined by the timer TRM in AN. If "N" in step S10, the procedure goes back to step S2 to allow the setup of a communication connection WCC again in step S2.

Preferably, also the ATM mobile terminal MT comprises a timer TMR and if after said sending of said authentication information request message AI-RQST an authentication information AI is not received from said network authentication device or security server SSD within a predetermined period, an interrupt means MT-IM of said ATM mobile terminal MT will close the setup wireless ATM radio communication networks WCC itself. The reason is, that at this point it can hardly be expected that the security service SSD of the WATM system will return an authentication information AI, i.e. that it is hardly likely that the mobile terminal MT has really a valid subscription for setting up communication connections in the WATM communication system.

Preferably, the ATM mobile terminal MT also comprises an automatic repetition means MT AUTO for automatically repeating a setup attempt after a predetermined time interval. That is, even before the security server SSD returns a negative response, i.e. that no authentication information can be found in the memory AI-MEM for the presently calling mobile calling MT, the mobile terminal MT can automatically again request the setup of a communication connection WCC to said access node AN.

If the mobile terminal MT has performed a predetermined number of repetitive setup requests, as counted by a counter MT-CNT, then an inhibition means MT-INHB of the mobile terminal MT inhibits any further setup requests after a predetermined number N of attempts.

Therefore, not only the access node AN can reject further setup requests by the same mobile terminal MT but also the mobile terminal MT itself may decide and recognize that in fact the security server SSD has no information stored whatsoever that would indicate that the presently calling mobile terminal MT is one that has been registered for wireless ATM connections to said access node AN.

Therefore, the above novel protocol can be summarized as follows (see also Fig. 5):
- S2:: Setup a secure association (a secured communication connection WCC) between the mobile terminal MT and the access node AN without any authentication procedure; start a timer TMR in the access node;
- S3/S4:: If the mobile terminal MT gets secret shared authentication within the predetermined time period through the ciphered communication channel WCC then the authentication takes place. If not, the access node interrupt means INT interrupts or closes the already setup communication connection WCC in step S8.
- S5:: Either the mobile terminal MT authenticates itself at the access node AN or the security server authentication device SSD authenticates the mobile terminal at the access node AN. If there is no time out by the timer TMR in the access node AN or the timer TMR in the mobile terminal MT, the general communication protocol for information transfer is set up between MT and AN in step S6.

### Industrial Applicability

As explained above a secure setup of a communication connection between MT and AN is established even if no authentication can be performed in the first run as explained with reference to Fig. 4. Authentication is performed afterwards either between MT and AN or between the authentication device SSD and AN. This is useful for example in a wireless ATM mobile terminal without hardware support for storing authentication information (e.g. a SIM card).

By the provision of the communication key memory CK-MEM, the operator of the mobile terminal MT or in fact the user application itself can establish a user-chosen confidentiality level without following authentication, e.g. to allow access of mobile terminals MT to networks in semi-public areas (e.g. airports). First, for example a user-application like a program running on a LAPTOP can - without a hardware support for storing authentication information like a SIM card - request an authentication information from a security server SSD and if a registration of such an authentication information has been previously performed in the memory AI-MEM of the security server SSD, than an access of the mobile terminal MT to the network is granted.

Furthermore, it should be noted that the authentication device SSD does not necessarily have to be a part of the WATM system. It can also be a part of the interconnected ATM fixed network which is shown in Fig. 2. However, confidentiality of user data on the ATM wireless radio connection WCC can be guaranteed, even if the fixed network is only involved after the setup of the security association, for example if the authentication information is requested from a security server SSD of the fixed network and is then - in a secure ciphered manner - transferred back to the mobile terminal through the secured communication channel.

Thus, a security service SSD for WATM systems can be implemented, that can be used in a non-ATM fixed network environment, i.e. if ATM calls are only used on the wireless radio link in the WATM system, whilst an ordinary digital transmission is used in the fixed network. Again, since the confidentiality is ensured on the wireless communication connection WCC, the authentication information can be requested and supplied by any security server SSD which is located even in the fixed network environment. This means that the transfer of the authentication information takes place along a wireless ATM communication connection which is already secured by the agreed selected secret ciphering key CR.

However, the inventive method, authentication device, mobile terminal and the access node can also be used in cases, where an ATM based fixed network implements security services on top of the ATM layer. This means, if the fixed network system is also an ATM-based fixed network, first the communication channel WCC with its confidentiality level is setup between the mobile terminal MT and the access node AN of the wireless ATM system (or in fact to an access node AN of the ATM-based fixed network) and thereafter the (secured) authentication information exchange is performed. For requesting and receiving the authentication information from a security server SSD of the ATM-based fixed network, a separate signaling channel from the access node AN of the WATM system to the access node AN of the ATM-based fixed network is preferably used.

The present invention provides confidentiality in different wireless ATM systems which are adapted for private and/or business and/or public environments or even mixed environments. Since the communication channel WCC is setup before a possible authentication procedure, there is provided the major advantage that security mechanisms within the WATM system or even security mechanisms from possibly interconnected fixed networks (non-ATM or ATM) can be accessed through the secured link WCC or can even be combined, in order to build a security architecture that offers much higher security level. Since the mobile terminal MT has access to the security functions located elsewhere in an interconnected network, a security architecture can be built, which is more flexible and which can offer a much higher security level.

Whilst the invention has been described with reference to its embodiments and the drawings to illustrate what is currently considered as the best mode of the invention, it is clear, that various modifications and variations will be possible for those skilled in the art in view of the above technical teachings. In the claims, reference numerals only serve clarification purposes and to not limit the scope of the invention. In the drawings the same or similar reference numerals designate the same or similar parts or steps.

## Claims

1. A method for setting up a secured communication between an mobile terminal (MT) and an access node (AN) of a wireless radio communication network (WATM), **characterized by** the step of setting up (S2) a wireless radio communication connection (WCC) between said mobile terminal (MT) and said access node (AN) without performing (ST2, ST3) an authentication information checking procedure therebefore, wherein an information exchange on said wireless radio communication connnection (WCC) is performed by using a secret communication key (CK) agreed upon by said access node (AN) and said mobile terminal (MT).

2. A method according to cl aim 1,
***characterized in that***
after said setting up of said wireless radio communication connection (WCC) between said mobile terminal (MT) and said access node (AN) is completed (S2), said mobile terminal (MT) is authenticated (S3, S5; S4, S8) at said access node (AN) by transferring authenticaton information (AI) identifying said mobile terminal (MT) to said access node (AN).

3. A method according to claim 2,
***characterized in that***
said mobile terminal (MT) sends an authentication information request message (AI-RQST, S3) to a network authentication device (SSD) provided by said wireles communication network (WATM) or by a further interconnected network (FN).

4. A method according to claim 3,
***characterized in that***
said authentication information (AI) is transferred (S4) to said mobile terminal (MT) in response to said request message (AI-RQST) and said mobile terminal (MT) performs an authentication procedure at said access node (AN) using said transferred authentication information (AI).

5. A method according to claim 3,
***characterized in that***
in response to said request meassage (AI-RQST), said network authentication device (SSD) of said wireless communication network (WATM) performs (S5) an authentication procedure for said mobile terminal (MT) at said access node (AN) using said requested authentication information (AI).

6. A method according to claim 2,
***characterized in that***
after said secure wireless radio commmunication connection (WCC) has been set up (S2), a timer (TMR) in said access node (AN) is started and said already setup wireless radio commmunication connection (WCC) is closed by said access node (AN) if said access node (AN) does not receive an authentication information (AI) for said mobile terminal (MT) within a predetermined time period (S8).

7. A method according to claim 6,
***characterized in that***
identity information (II, MAC)) of said mobile terminal (MT) and the number of authentication retries (MTr) is stored (ID-MEM) in said access node (AN) if said access node (AN) does not receive said authentication information (AI) within said predetermined time period (S9).

8. A method according to claim 7,
***characterized in that***
when said number of authentication retries (MTr) exceeds (S10) a predetermined number (N), further requests by said mobile terminal (MT) to set up a wireless radio communication connection (WCC) between said mobile terminal (MT) and said access node (AN) are rejected (S11) by said access node (AN).

9. A method according to claim 1,
***characterized in that***
said secret communication key (CK) is selected by said mobile terminal (MT) durihg the setting up of the wireless radio communication connection (WCC).

10. A method according to claim 1,
***characterized in that***
to said wireless radio communication network (WATM) access node (AN) is connected a non-ATM fixed network (FN) providing functions and services to a plurality of fixed network subscribers (SS), wherein said mobile terminal (MT) accesses said functions and services via said secured wireless radio communication connection setup between said, mobile terminal (MT) and said, access node (AN).

11. An authentication device (SSD), in particular for a wireless radio communication network (WATM), comprising:
**a)** an authentication information storage means (AI-MEM) for storing a plurality of authentication informations (AI) each corresponding to a respective mobile terminal (MT) served by a wireless radio communication network (WATM); and
**b)** an authentication information transmisssion means (TR) for issuing an authentication information (AI) in reponse to receiving an authentication information request (AI-RQST) from an mobile terminal (MT) after a wireless radio communication connection (WCC) has been setup between said requesting mobile terminal (MT) and said access node (AN) using a secret communication key (CK) agreed upon by said access node (AN) and said mobile terminal (MT).

12. A device according to claim 11,
whereby
said transmission means (AI-TR) is adapted to transfer said authentication information (AI) back to said requesting mobile terminal (MT).

13. A device according to claim 11,
whereby
said transmission means (AI-TR) is adapted to transfer said authentication information (AI) to said access node (AN) to perform an authentication procedure for said mobile terminal at said access node (AN).

14. A device according to claim 11,
whereby
to said wireless radio communication network (WATM) access node (AN) is connected a non-ATM fixed network (FN) providing functions and services to a plurality of fixed network subscribers (SS), wherein said mobile terminal (MT) access said functions and services via said secured wireless radio communication link setup between said mobile terminal and said access node (AN).

15. An access node (AN) of a wireless communication network (WATM) for setting up a secured wireless communication connection (WCC) to an mobile terminal (MT), said .. access node (AN) comprising:
**a)** a setup means (AN-SET) for setting up (S2) a wireless radio communication connection (WCC) to said mobile terminal (MT) without performing (ST2, ST3) an authentication information checking procedure therebefore;
**b)** a secret communication key (CK) storage means (CK-MEM) for storing a secret communication key (CK) used by said mobile terminal (MT) and said access node (AN) for performing wireless communications.

16. An access node (AN) according to claim 15,
whereby
an authentication means (AN-AM) for authenticating said mobile terminal (MT) at said access node (AN) when
an authentication information reception means (AI-RM) receives authenticaton information (AI) identifying said mobile terminal (MT).

17. An access node (AN) according to claim 16,
whereby
said authentication information reception means (AI-RM) receives said authentication information (AI) from said mobile terminal (MT).

18. An access node (AN) according to claim 16,
whereby
said authentication information reception means (AI-RM) receives said authentication information (AI) from a network authentification device (SSD) separately provided by said wireless radio communication network (WATM) or by a further or interconnected network (FN).

19. An access node (AN) according to claim 16,
whereby
said access node (AN) comprises a timer (TMR), which is started after said wireless communication connection (WCC) between said access node (AN) and said mobile terminal (MT) has been setup by said setup means (AN-SET).

20. An access node (AN) according to claim 19,
whereby
said access node (AN) comprises an interrupt means (INT) for closing an already setup secured wireless radio commmunication connection (WCC) if said authentication information reception means (AI-RM) does not receive an authentication information for said mobile terminal (MT) within a predetermined time period (S8) as determined by said timer (TMR).

21. An access node (AN) according to claim 20,
whereby
identity information (II, MAC)) of said mobile terminal (MT) and the number of authentication retires (MTr) is stored in an identity memory (ID-MEM) in said access node (AN) if said authentication information reception means (AI-RM) does not receive said authentication information (AI) within said predetermined time period (S9).

22. An access node (AN) according to claim 21,
whereby
when said number of authentication retries (MTr) exceeds (S10) a predetermined number (N), an inhibiting means (AN-INBT) of said access node (AN) inhibits further requests by said mobile terminal (MT) to set up a wireless radio communication connection (WCC) between said mobile terminal (MT) and said access node (AN).

23. An, access node (AN) according to claim 15,
whereby
to said access node (AN) is connected a non-ATM fixed network (FN) providing functions and services to a plurality of fixed network subscribers (SS), wherein said mobile terminal (MT) accesses said functions and services via said wireless radio communication link setup between said mobile terminal and said access node (AN).

24. An mobile terminal (MT) for setting up a secured communication (WCC) to an access node (AN) of a wireless communication network (WATM), comprising:
**a)** a setup means (MT-SET) for setting up (S2) a wireless radio communication connection (WCC) to said access node (AN) without performing (ST2, ST3) an authentication information checking procedure therebefore;
**b)** a secret communication key storage means (CK-MEM) for storing a secret communication key (CK) used by said mobile terminal (MT) and said access node (AN) for performing wireless communications.

25. An mobile terminal (MT) according to claim 24,
whereby
an authentication means (MT-AM) of said mobile terminal (MT) sends an authentication information request message (AI-RQST; S3) to a network authentication device (SSD) provided by said wireles communication network (WATM) or an interconnected fixed network (FN).

26. An mobile terminal (MT) according to claim 25,
whereby
an authentication information recepetion means (MT-RM) receives said authentication information (AI) from said network authentication device (SSD) in response to said request message (AI-RQST).

27. An mobile terminal (MT) according to claim 26,
whereby
said authentication means (MT-AM) transfers said received authentication information (AI) to said access node (AN).

28. An mobile terminal (MT) according to claim 25 and
26, whereby
said mobile terminal (MT) comprises a timer (TMR) and if after said sending of said authentication information request message (AI-RQST) an authentication information (AI) is not received from said network authentication device (SSD), an interrupt means (MT-IM) of said mobile terminal (MT) closes said setup wireless radio communication connection (WCC) between said mobile terminal (MT) and said access node (AN).

29. An mobile terminal (MT) according to claim 25,
whereby
said mobile terminal (MT) comprises an automatic repetition means (MT-AUTO) for automatically repeating a setup attempt after a predetermined time intervall.

30. An mobile terminal (MT) according to claim 29,
whereby
said mobile terminal (MT) comprises a counter (MT-CNT) which counts the number of repetitive attempts to setup a connection by said setup means (MT-SET), wherein an inhibition means (MT-INHB) inhibits further setup requests after a predetermined number (N) of attempts.

31. An mobile terminal (MT) according to claim 24,
whereby
a secret key selection means (MT-SEL) for selecting a secret key (CK) used for the wireless communication connection (WCC).

32. An wireless communication network (WATM), comprising at least one mobile terminal (MT) according to one or more of claims 24-31, at least one access node (AN) according to one or more of claims 15-23 and an exchange means (EX) for setting up wireless radio communcication connections (WCC) between said at least one mobile terminal (MT) and said at least one access node (AN).

33. An wireless communication network (WATM) according to claim 32, whereby
to said wireless radio communication network (WATM) is connected a non-ATM fixed network (FN) providing functions and services to a plurality of fixed network subscribers (SS), wherein said mobile terminal (MT) accesses said functions and services via said wireless radio communication connection (WCC) setup between said mobile terminal (MT) and said access node (AN).

34. A method according to claim 4, whereby
said authentication information (AI) is transferred back to said mobile terminal (MT) through said setup secured communication connection (WCC) .

35. A device according to claim 12, whereby
said transmission means (TR) transfers back said authentication information to said mobile terminal (MT) through said setup secured communication connection (WCC).

36. An access node (AN) according to claim 16, whereby a transmission means (TR) of said access node (AN) transfers back said authentication information to said mobile terminal (MT) through said setup secured communication connection (WCC).

37. An mobile terminal (MT) according to claim 26, whereby said authentication information reception means (MT-RM) receives said authentication information (AI) through said setup secured communication connection (WCC) setup between said access node (AN) and said mobile terminal (MT).

38. An mobile terminal (MT) according to claim 27 whereby said authentication means (MT-AM) transfers said authentication information (AI) through said secured communication connection (WCC) setup between said access node (AN) and said mobile terminal (MT) to said access node (AN).

## Patentansprüche

1. Verfahren zum Aufbauen einer sicheren Kommunikation zwischen einem Mobilendgerät (MT) und einem Zugriffsknoten (AN) eines Drahtlos-Funkkommunikationsnetzwerks (WATM), **gekennzeichnet durch** den Schritt eines Aufbauens (S2) von einer Drahtlos-Funkkommunikationsverbindung (WCC) zwischen dem Mobilendgerät (MT) und dem Zugriffsknoten (AN), ohne einer vorherigen Durchführung (ST2, ST3) von einer Authentifizierungsinformations-Überprüfungsprozedur, wobei ein Informationsaustausch auf der Drahtlos-Funkkommunikationsverbindung (WCC) unter Verwendung eines geheimen Kommunikationsschlüssels (CK) durchgeführt wird, welcher **durch** den Zugriffsknoten (AN) und das Mobilendgerät (MT) vereinbart ist.

2. Verfahren nach Anspruch 1, **dadurch gekennzeichnet, dass**, nachdem der Aufbau von der Drahtlos-Funkkommunikationsverbindung (WCC) zwischen dem Mobilendgerät (MT) und dem Zugriffsknoten (AN) vollendet ist (S2), das Mobilendgerät (MT) am Zugriffsknoten (AN) authentifiziert wird (S3, S5; S4, S8), indem eine Authentifizierungsinformation (AI), welche das Mobilendgerät (MT) identifiziert, an den Zugriffsknoten (AN) übertragen wird.

3. Verfahren nach Anspruch 2, **dadurch gekennzeichnet, dass** das Mobilendgerät (MT) eine
Authentifizierungsinformations-Anforderungsmeldung (AI-RQST, S3) an eine Netzwerk-Authentifizierungsvorrichtung (SSD) sendet, welche durch das Drahtlos-Kommunikationsnetzwerk (WATM) oder durch ein weiteres zwischenverbundenes Netzwerk (FN) bereitgestellt ist.

4. Verfahren nach Anspruch 3, **dadurch gekennzeichnet, dass** die Authentifizierungsinformation (AI) an das Mobilendgerät (MT) in Ansprechen auf die Anforderungsmeldung (AI-RQST) übertragen wird (S4), und das Mobilendgerät (MT) eine Authentifizierungs-Prozedur am Zugriffsknoten (AN) unter Verwendung der übertragenen Authentifizierungsinformation (AI) durchführt.

5. Verfahren nach Anspruch 3, **dadurch gekennzeichnet, dass** die Netzwerk-Authentifizierungsvorrichtung (SSD) des Drahtlos-Kommunikationsnetzwerks (WATM) in Ansprechen auf die Anforderungsmeldung (AI-RQST) eine Authentifizierungs-Prozedur für das Mobilendgerät (MT) am Zugriffsknoten (AN) unter Verwendung der angeforderten Authentifizierungsinformation (AI) durchführt (S5) .

6. Verfahren nach Anspruch 2, **dadurch gekennzeichnet, dass**, nachdem die sichere Drahtlos-Funkkommunikationsverbindung (WCC) aufgebaut wurde (S2), ein Zeitnehmer (TMR) im Zugriffsknoten (AN) gestartet wird, und die bereits aufgebaute Drahtlos-Funkkommunikationsverbindung (WCC) durch den Zugriffsknoten (AN) geschlossen wird, wenn der Zugriffsknoten (AN) innerhalb einer vorbestimmten Zeitperiode keine Authentifizierungsinformation (AI) für das Mobilendgerät (MT) empfängt (S8).

7. Verfahren nach Anspruch 6, **dadurch gekennzeichnet, dass** eine Identitäts-Information (II, MAC) des Mobilendgeräts (MT) und die Anzahl von Authentifizierungswiederholungen (MTr) im Zugriffsknoten (AN) gespeichert werden (ID-MEM), wenn der Zugriffsknoten (AN) innerhalb der vorbestimmten Zeitperiode nicht die Authentifizierungsinformation (AI) empfängt (S9).

8. Verfahren nach Anspruch 7, **dadurch gekennzeichnet, dass**, wenn die Anzahl von Authentifizierungswiederholungen (MTr) eine vorbestimmte Anzahl (N) übersteigt (S10), weitere Anforderungen durch das Mobilendgerät (MT) zum Aufbau einer Drahtlos-Funkkommunikationsverbindung (WCC) zwischen dem Mobilendgerät (MT) und dem Zugriffsknoten (AN) durch den Zugriffsknoten (AN) verworfen werden (S11).

9. Verfahren nach Anspruch 1, **dadurch gekennzeichnet, dass** der geheime Kommunikationsschlüssel (CK) durch das Mobilendgerät (MT) während des Aufbaus der Drahtlos-Funkkommunikationsverbindung (WCC) ausgewählt wird.

10. Verfahren nach Anspruch 1, **dadurch gekennzeichnet, dass** an dem Drahtlos-Funkkommunikationsnetzwerk (WATM) Zugriffsknoten (AN) ein Nicht-ATM fixiertes Netzwerk (FN) verbunden ist, welches Funktionen und Dienste an eine Mehrzahl von fixierten Netzwerk-Teilnehmern (SS) bereitstellt, wobei das Mobilendgerät (MT) auf die Funktionen und Dienste über die sichere Drahtlos-Funkkommunikationsverbindung zugreift, welche zwischen dem Mobilendgerät (MT) und dem Zugriffsknoten (AN) aufgebaut ist.

11. Authentifizierungsvorrichtung (SSD), insbesondere für ein Drahtlos-Funkkommunikationsnetzwerk (WATM), welche enthält:
a) ein Authentifizierungsinformations-Speichermittel (AI-MEM) zum Speichern einer Mehrzahl von Authentifizierungsinformationen (AI), wobei jede einem jeweiligen Mobilendgerät (MT) entspricht, welches durch ein Drahtlos-Funkkommunikationsnetzwerk (WATM) bedient wird; und
b) ein Authentifizierungsinformations-Übertragungsmittel (TR) zum Ausgeben von einer
Authentifizierungsinformation (AI) in Ansprechen auf einen Empfang von einer
Authentifizierungsinformations-Anforderung (AI-RQST) von einem Mobilendgerät (MT), nachdem eine Drahtlos-Funkkommunikationsverbindung (WCC) zwischen dem anfordernden Mobilendgerät (MT) und dem Zugriffsknoten (AN) unter Verwendung eines geheimen Kommunikationsschlüssels (CK) aufgebaut wurde, welcher durch den Zugriffsknoten (AN) und das Mobilendgerät (MT) vereinbart ist.

12. Vorrichtung nach Anspruch 11, bei welcher das Übertragungsmittel (AI-TR) dazu angepasst ist, die Authentifizierungsinformation (AI) zurück an das anfordernde Mobilendgerät (MT) zu übertragen.

13. Vorrichtung nach Anspruch 11, bei welcher das Übertragungsmittel (AI-TR) dazu angepasst ist, die Authentifizierungsinformation (AI) an den Zugriffsknoten (AN) zu übertragen, um eine Authentifizierungs-Prozedur für das Mobilendgerät am Zugriffsknoten (AN) durchzuführen.

14. Vorrichtung nach Anspruch 11, bei welcher am Drahtlos-Funkkommunikationsnetzwerk (WATM) Zugriffsknoten (AN) ein Nicht-ATM fixiertes Netzwerk (FN) verbunden ist, welches Funktionen und Dienste an eine Mehrzahl von fixierten Netzwerk-Teilnehmern (SS) bereitstellt, wobei das Mobilendgerät (MT) auf die Funktionen und Dienste über die sichere Drahtlos-Funkkommunikationsverbindung zugreift, welche zwischen dem Mobilendgerät und dem Zugriffsknoten (AN) aufgebaut ist.

15. Zugriffsknoten (AN) eines Drahtlos-Kommunikationsnetzwerks (WATM) zum Aufbauen einer sicheren Drahtlos-Kommunikationsverbindung (WCC) an ein Mobilendgerät (MT), wobei der Zugriffsknoten (AN) enthält:
a) ein Aufbaumittel (AN-SET) zum Aufbauen (S2) von einer Drahtlos-Funkkommunikationsverbindung (WCC) an das Mobilendgerät (MT), ohne zuvor eine Authentifizierungsinformations-Überprüfungsprozedur (ST2, ST3) durchzuführen;
b) ein Geheimkommunikationsschlüssel (CK) Speichermittel (CK-MEM) zum Speichern eines geheimen Kommunikationsschlüssels (CK), welcher durch das Mobilendgerät (MT) und den Zugriffsknoten (AN) zur Durchführung von Drahtloskommunikationen verwendet wird.

16. Zugriffsknoten (AN) nach Anspruch 15, mit einem Authentifizierungsmittel (AN-AM) zum Authentifizieren des Mobilendgeräts (MT) am Zugriffsknoten (AN), wenn ein Authentifizierungsinformations-Empfangsmittel (AI-RM) eine Authentifizierungsinformation (AI) empfängt, welche das Mobilendgerät (MT) identifiziert.

17. Zugriffsknoten (AN) nach Anspruch 16, bei welchem das Authentifizierungsinformations-Empfangsmittel (AI-RM) die Authentifizierungsinformation (AI) vom Mobilendgerät (MT) empfängt.

18. Zugriffsknoten (AN) nach Anspruch 16, bei welchem das Authentifizierungsinformations-Empfangsmittel (AI-RM) die Authentifizierungsinformation (AI) von einer Netzwerk-Authentifizierungsvorrichtung (SSD) empfängt, welche separat durch das Drahtlos-Funkkommunikationsnetzwerk (WATM) oder durch ein weiteres oder ein zwischenverbundenes Netzwerk (FN) bereitgestellt ist.

19. Zugriffsknoten (AN) nach Anspruch 16, bei welchem der Zugriffsknoten (AN) einen Zeitnehmer (TMR) enthält, welcher gestartet wird, nachdem die Drahtlos-Kommunikationsverbindung (WCC) zwischen dem Zugriffsknoten (AN) und dem Mobilendgerät (MT) durch das Aufbaumittel (AN-SET) aufgebaut wurde.

20. Zugriffsknoten (AN) nach Anspruch 19, bei welchem der Zugriffsknoten (AN) ein Unterbrechungsmittel (INT) zum Schließen einer bereits aufgebauten sicheren Drahtlos-Funkkommunikationsverbindung (WCC) enthält, wenn das Authentifizierungsinformations-Empfangsmittel (AI-RM) keine Authentifizierungsinformation für das Mobilendgerät (MT) innerhalb einer vorbestimmten Zeitperiode, wie durch den Zeitnehmer (TMR) bestimmt, empfängt (S8).

21. Zugriffsknoten (AN) nach Anspruch 20, bei welchem eine Identitätsinformation (II, MAC) des Mobilendgeräts (MT) und die Anzahl von Authentifizierungs-Wiederholungen (MTr) in einem Identitätsspeicher (ID-MEM) im Zugriffsknoten (AN) gespeichert werden, wenn das Authentifizierungsinformations-Empfangsmittel (AI-RM) innerhalb der vorbestimmten Zeitperiode nicht die Authentifizierungsinformation (AI) empfängt (S9).

22. Zugriffsknoten (AN) nach Anspruch 21, bei welchem, wenn die Anzahl von Authentifizierungs-Wiederholungen (MTr) eine vorbestimmte Anzahl (N) übersteigt (S10), ein Unterdrückungsmittel (AN-INBT) des Zugriffsknotens (AN) weitere Anforderungen durch das Mobilendgerät (MT) zum Aufbau einer Drahtlos-Funkkommunikationsverbindung (WCC) zwischen dem Mobilendgerät (MT) und dem Zugriffsknoten (AN) unterdrückt.

23. Zugriffsknoten (AN) nach Anspruch 15, bei welchem an dem Zugriffsknoten (AN) ein Nicht-ATM fixiertes Netzwerk (FN) verbunden ist, welches Funktionen und Dienste an eine Mehrzahl von fixierten Netzwerk-Teilnehmern (SS) bereitstellt, wobei das Mobilendgerät (MT) auf die Funktionen und Dienste über die Drahtlos-Funkkommunikationsverbindung zugreift, welche zwischen dem Mobilendgerät und dem Zugriffsknoten (AN) aufgebaut ist.

24. Mobilendgerät (MT) zum Aufbauen einer sicheren Kommunikation (WCC) an einen Zugriffsknoten (AN) eines Drahtlos-Funkkommunikationsnetzwerks (WATM), welches enthält:
a) ein Aufbaumittel (AN-SET) zum Aufbauen (S2) von einer Drahtlos-Funkkommunikationsverbindung (WCC) an den Zugriffsknoten (AN), ohne zuvor eine Authentifizierungsinformations-Überprüfungsprozedur durchzuführen (ST2, ST3);
b) ein Geheimkommunikationsschlüssel Speichermittel (CK-MEM) zum Speichern eines geheimen Kommunikationsschlüssels (CK), welcher durch das Mobilendgerät (MT) und den Zugriffsknoten (AN) zur Durchführung von Drahtloskommunikationen verwendet wird.

25. Mobilendgerät (MT) nach Anspruch 24, bei welchem ein Authentifizierungsmittel (MT-AM) des Mobilendgeräts (MT) eine Authentifizierungsinformations-Anforderungsmeldung (AI-RQST; S3) an eine Netzwerk-Authentifizierungsvorrichtung (SSD) sendet, welche durch das Drahtlos-Kommunikationsnetzwerk (WATM) oder ein zwischenverbundenes fixiertes Netzwerk (FN) bereitgestellt ist.

26. Mobilendgerät (MT) nach Anspruch 25, bei welchem ein Authentifizierungsinformations-Empfangsmittel (MT-MR) die Authentifizierungsinformation (AI) von der Netzwerk-Authentifizierungsvorrichtung (SSD) in Ansprechen auf die Anforderungsmeldung (AI-RQST) empfängt.

27. Mobilendgerät (MT) nach Anspruch 26, bei welchem das Authentifizierungsmittel (MT-AM) die empfangene Authentifizierungsinformation (AI) an den Zugriffsknoten (AN) überträgt.

28. Mobilendgerät (MT) nach Anspruch 25 und 26, bei welchem das Mobilendgerät (MT) einen Zeitnehmer (TMR) enthält, und, wenn nach dem Senden der
Authentifizierungsinformations-Anforderungsmeldung (AI-RQST) keine Authentifizierungsinformation (AI) von der Netzwerk-Authentifizierungsvorrichtung (SSD) empfangen ist, ein Unterbrechungsmittel (MT-IM) des Mobilendgeräts (MT) die aufgebaute Drahtlos-Funkkommunikationsverbindung (WCC) zwischen dem Mobilendgerät (MT) und dem Zugriffsknoten (AN) schließt.

29. Mobilendgerät (MT) nach Anspruch 25, bei welchem das Mobilendgerät (MT) ein automatisches Wiederholungsmittel (MT-AUTO) zum automatischen Wiederholen eines Aufbauversuchs nach einem vorbestimmten Zeitintervall enthält.

30. Mobilendgerät (MT) nach Anspruch 29, bei welchem das Mobilendgerät (MT) einen Zähler (MT-CNT) enthält, welcher die Anzahl von wiederholten Versuchen zum Aufbau einer Verbindung durch das Aufbaumittel (MT-SET) zählt, wobei ein Unterdrückungsmittel (MT-INHB) weitere Aufbauanforderungen nach einer vorbestimmten Anzahl (N) von Versuchen unterdrückt.

31. Mobilendgerät (MT) nach Anspruch 24 mit einem Geheimschlüssel-Auswahlmittel (MT-SEL) zum Auswählen eines geheimen Schlüssels (CK), welcher für die Drahtlos-Kommunikationsverbindung (WCC) verwendet wird.

32. Drahtlos-Kommunikationsnetzwerk (WATM), welches zumindest ein Mobilendgerät (MT) nach einem oder mehreren der Ansprüche 24-31, zumindest einen Zugriffsknoten (AN) nach einem oder mehreren der Ansprüche 15-23, und ein Austauschmittel (EX) zum Aufbau von Drahtlos-Funkkommunikationsverbindungen (WCC) zwischen dem zumindest einen Mobilendgerät (MT) und dem zumindest einen Zugriffsknoten (AN) enthält.

33. Drahtlos-Kommunikationsnetzwerk (WATM) nach Anspruch 32, bei welchem an dem Drahtlos-Funkkommunikationsnetzwerk (WATM) ein Nicht-ATM fixiertes Netzwerk (FN) verbunden ist, welches Funktionen und Dienste an eine Mehrzahl von fixierten Netzwerk-Teilnehmern (SS) bereitstellt, wobei das Mobilendgerät (MT) auf die Funktionen und Dienste über die Drahtlos-Funkkommunikationsverbindung (WCC) zugreift, welche zwischen dem Mobilendgerät (MT) und dem Zugriffsknoten (AN) aufgebaut ist.

34. Verfahren nach Anspruch 4, bei welchem die Authentifizierungsinformation (AI) durch die aufgebaute sichere Kommunikationsverbindung (WCC) zurück an das Mobilendgerät (MT) übertragen wird.

35. Vorrichtung nach Anspruch 12, bei welchem das Übertragungsmittel (TR) die Authentifizierungsinformation durch die aufgebaute sichere Kommunikationsverbindung (WCC) zurück an das Mobilendgerät (MT) überträgt.

36. Zugriffsknoten (AN) nach Anspruch 16, bei welchem ein Übertragungsmittel (TR) des Zugriffsknotens (AN) die Authentifizierungsinformation durch die aufgebaute sichere Kommunikationsverbindung (WCC) zurück an das Mobilendgerät (MT) überträgt.

37. Mobilendgerät (MT) nach Anspruch 26, bei welchem das Authentifizierungsinformations-Empfangsmittel (MT-RM) die Authentifizierungsinformation (AI) durch die aufgebaute sichere Kommunikationsverbindung (WCC) empfängt, welche zwischen dem Zugriffsknoten (AN) und dem Mobilendgerät (MT) aufgebaut ist.

38. Mobilendgerät (MT) nach Anspruch 27, bei welchem das Authentifizierungsmittel (MT-AM) die Authentifizierungsinformation (AI) durch die sichere Kommunikationsverbindung (WCC), welche zwischen dem Zugriffsknoten (AN) und dem Mobilendgerät (MT) aufgebaut ist, an den Zugriffsknoten (AN) überträgt.

## Revendications

1. Procédé pour établir une communication sécurisée entre un terminal mobile (MT) et un noeud d'accès (AN) d'un réseau de communication radio sans fil (WATM), **caractérisé par** l'étape consistant à établir (S2) une connexion de communications radio sans fil (WCC) entre ledit terminal mobile (MT) et ledit noeud d'accès (AN) sans exécuter au préalable (ST2, ST3) une procédure de vérification d'informations d'authentification, dans lequel un échange d'informations sur ladite connexion de communication radio sans fil (WCC) est effectué en utilisant une clé de communication secrète (CK) convenue entre ledit noeud d'accès (AN) et ledit terminal mobile (MT).

2. Procédé selon la revendication 1, **caractérisé en ce que** :
après que ledit établissement de ladite connexion de communication radio sans fil (WCC) entre ledit terminal (MT) et ledit noeud d'accès (AN) a été effectué (S2), ledit terminal mobile (MT) est authentifié (S3, S5 ; S4, S8) sur ledit noeud d'accès (AN) par transfert d'informations d'authentification (AI) identifiant ledit terminal mobile (MT) sur ledit noeud d'accès (AN).

3. Procédé selon la revendication 2, **caractérisé en ce que** :
ledit terminal mobile (MT) envoie un message de demande d'informations d'authentification (AI-RQST, S3) à un dispositif d'authentification de réseau (SSD) constitué par ledit réseau de communication sans fil (WATM) ou par un autre réseau interconnecté (FN).

4. Procédé selon la revendication 3, **caractérisé en ce que** :
lesdites informations d'authentification (AI) sont transférées (S4) audit terminal mobile (MT) en réponse audit message de demande (AI-RQST) et **en ce que** ledit terminal mobile (MT) exécute une procédure d'authentification sur ledit noeud d'accès (AN) en utilisant lesdites informations d'authentification transférées (AI).

5. Procédé selon la revendication 3, **caractérisé en ce que** :
en réponse audit message de demande (AI-RQST), ledit dispositif d'authentification de réseau (SSD) dudit réseau de communication sans fil (WATM) exécute (S5) une procédure d'authentification pour ledit terminal mobile (MT) sur ledit noeud d'accès (AN) en utilisant lesdites informations d'authentification demandées (AI).

6. Procédé selon la revendication 2, **caractérisé en ce que** :
après que ladite connexion de communication radio sans fil sécurisée (WCC) a été établie (S3), un compteur de temps (TMR) dudit noeud d'accès (AN) est déclenché et ladite connexion de communication radio sans fil (WCC) déjà établie est fermée par ledit noeud d'accès (AN) si ledit noeud d'accès (AN) n'a pas reçu d'informations d'authentification (AI) pour ledit terminal mobile (MT) dans une période de temps prédéterminée (S8).

7. Procédé selon la revendication 6, **caractérisé en ce que** :
des informations d'identité (II, MAC) dudit terminal mobile (MT) et le nombre de nouvelles tentatives d'authentification (MTr) sont stockées (ID-MEM) dans ledit noeud d'accès (AN) si ledit noeud d'accès (AN) n'a pas reçu lesdites informations d'authentification (AI) dans une période de temps prédéterminée (S9).

8. Procédé selon la revendication 7, **caractérisé en ce que** :
lorsque ledit nombre de nouvelles tentatives d'authentification (MTr) dépasse (S10) un nombre prédéterminé (N), des demandes supplémentaires provenant dudit terminal mobile (MT) pour établir une connexion de communication radio sans fil (WCC) entre ledit terminal mobile (MT) et ledit noeud d'accès (AN) sont rejetées (S11) par ledit noeud d'accès (AN).

9. Procédé selon la revendication 1, **caractérisé en ce que**:
ladite clé de communications secrète (CK) est sélectionnée par ledit terminal mobile (MT) pendant l'établissement de la connexion de communication radio sans fil (WCC).

10. Procédé selon la revendication 1, **caractérisé en ce que** :
audit noeud d'accès (AN) dudit réseau de communication radio sans fil (WATM) est connecté un réseau fixe (FN) non-ATM fournissant des fonctions et des services à une pluralité d'abonnés au réseau fixe (SS), ledit terminal mobile (MT) accédant auxdites fonctions et auxdits services par l'intermédiaire de ladite connexion de communication radio sans fil sécurisée établie entre ledit terminal mobile (MT) et ledit noeud d'accès (AN).

11. Dispositif d'authentification (SSD), notamment destiné à un réseau de communication radio sans fil (WATM), comprenant :
a) un moyen de stockage d'informations d'authentification (AI-MEM) pour stocker une pluralité d'informations d'authentification (AI) correspondant chacune à un terminal mobile respectif (MT) desservi par un réseau de communication radio sans fil (WATM) ; et
b) un moyen de transmission d'informations d'authentification (TR) pour envoyer des informations d'authentification (AI) en réponse à la réception d'une demande d'informations d'authentification (AI-RQST) provenant d'un terminal mobile (MT) après qu'une connexion de communication radio sans fil (WCC) a été établie entre ledit terminal mobile (MT) demandeur et ledit noeud d'accès (AN) en utilisant une clé de communication secrète (CK) convenue entre ledit noeud d'accès (AN) et ledit terminal mobile (MT).

12. Dispositif selon la revendication 11, dans lequel :
ledit moyen de transmission (AI-TR) est apte à renvoyer lesdites informations d'authentification (AI) audit terminal mobile (MT) demandeur.

13. Dispositif selon la revendication 11, dans lequel :
ledit moyen de transmission (AI-TR) est apte à transférer lesdites informations d'authentification (AI) audit noeud d'accès (AN) pour exécuter une procédure d'authentification pour ledit terminal mobile sur ledit noeud d'accès (AN).

14. Dispositif selon la revendication 11, dans lequel :
audit noeud d'accès (AN) dudit réseau de communication radio sans fil (WATM) est connecté un réseau fixe (FN) non-ATM fournissant des fonctions et des services à une pluralité d'abonnés au réseau fixe (SS), ledit terminal mobile (MT) accédant auxdites fonctions et auxdits services par l'intermédiaire de ladite liaison de communication radio sans fil sécurisée établie entre ledit terminal mobile et ledit noeud d'accès (AN).

15. Noeud d'accès (AN) d'un réseau de communication sans fil (WATM) pour établir une connexion de communication sans fil sécurisée (WCC) à un terminal mobile (MT), ledit noeud d'accès (AN) comprenant :
a) un moyen d'établissement (AN-SET) pour établir (S2) une connexion de communication radio sans fil (WCC) audit terminal mobile (MT) sans exécuter au préalable (ST2, ST3) une procédure de vérification des informations d'authentification;
b) un moyen de stockage (CK-MEM) de clé de communication (CK) pour stocker une clé de communication secrète (CK) utilisée par ledit terminal mobile (MT) et par ledit noeud d'accès (AN) pour effectuer des communications sans fil.

16. Noeud d'accès (AN) selon la revendication 15, dans lequel :
un moyen d'authentification (AN-AM) authentifie ledit terminal mobile (MT) sur ledit noeud d'accès (AN) lorsqu'un moyen de réception d'informations d'authentification (AI-RM) reçoit des informations d'authentification (AI) identifiant ledit terminal mobile (MT) .

17. Noeud d'accès (AN) selon la revendication 16, dans lequel :
ledit moyen de réception d'informations d'authentification (AI-RM) reçoit lesdites informations d'authentification (AI) dudit terminal mobile (MT).

18. Noeud d'accès (AN) selon la revendication 16, dans lequel :
ledit moyen de réception d'informations d'authentification (AI-RM) reçoit lesdites informations d'authentification (AI) d'un dispositif d'authentification de réseau (SSD) fourni séparément par ledit réseau de communication radio sans fil (WATM) ou par un réseau supplémentaire ou interconnecté (FN).

19. Noeud d'accès (AN) selon la revendication 16, dans lequel :
ledit noeud d'accès (AN) comprend un compteur de temps (TMR), qui est déclenché après que ladite connexion de communication sans fil (WCC) entre ledit noeud d'accès (AN) et ledit terminal mobile (MT) a été établie par ledit moyen d'établissement (AN-SET).

20. Noeud d'accès (AN) selon la revendication 19, dans lequel :
ledit noeud d'accès (AN) comprend un moyen d'interruption (INT) pour fermer une connexion de communication radio sans fil sécurisée (WCC) déjà établie si ledit moyen de réception d'informations d'authentification (AI-RM) ne reçoit pas d'informations d'authentification pour ledit terminal mobile (MT) avant une période de temps prédéterminée (S8) telle qu'elle a été déterminée par ledit compteur de temps (TMR).

21. Noeud d'accès (AN) selon la revendication 20, dans lequel:
des informations d'identification (II, MAC) dudit terminal mobile (MT) et le nombre de nouvelles tentatives d'authentification (MTr) sont stockées dans une mémoire d'identité (ID-MEM) dans ledit noeud d'accès (AN) si ledit moyen de réception d'informations d'authentification (AI-RM) ne reçoit pas lesdites informations d'authentification (AI) dans ladite période de temps prédéterminée (S9).

22. Noeud d'accès (AN) selon la revendication 21, dans lequel :
lorsque ledit nombre de nouvelles tentatives d'authentification (MTr) dépasse (S10) un nombre prédéterminé (N), un moyen d'inhibition (AN-INBT) dudit noeud d'accès (AN) inhibe des demandes supplémentaires provenant dudit terminal mobile (MT) pour établir une connexion de communication radio sans fil (WCC) entre ledit terminal mobile (MT) et ledit noeud d'accès (AN).

23. Noeud d'accès (AN) selon la revendication 15, dans lequel :
un réseau fixe (FN) non-ATM fournissant des fonctions et des services à une pluralité d'abonnés au réseau fixe (SS) est connecté audit noeud d'accès (AN), ledit terminal mobile (MT) accédant auxdites fonctions et auxdits services par l'intermédiaire de ladite liaison de communication radio sans fil établie entre ledit terminal mobile et ledit noeud d'accès (AN).

24. Terminal mobile (MT) pour établir une communication sécurisée (WCC) avec un noeud d'accès (AN) d'un réseau de communication sans fil (WATM), comprenant :
a) un moyen d'établissement (MT-SET) pour établir (S2) une connexion de communication radio sans fil (WCC) avec ledit noeud d'accès (AN) sans exécuter au préalable (ST2, ST3) une procédure de vérification des informations d'authentification ;
b) un moyen de stockage de clé de communication secrète (CK-MEM) pour stocker une clé de communication secrète (CK) utilisée par ledit terminal mobile (MT) et par ledit noeud d'accès (AN) pour effectuer des communications sans fil.

25. Terminal mobile (MT) selon la revendication 24, dans lequel:
un moyen d'authentification (MT-AM) dudit terminal mobile (MT) envoie un message de demande d'informations d'authentification (AI-RQST; S3) à un dispositif d'authentification de réseau (SSD) fourni par ledit réseau de communication sans fil (WATM) ou un réseau fixe (FN) interconnecté.

26. Terminal mobile (MT) selon la revendication 25, dans lequel :
un moyen de réception d'informations d'authentification (MT-RM) reçoit lesdites informations d'authentification (AI) dudit dispositif d'authentification de réseau (SSD) en réponse audit message de demande (AI-RQST).

27. Terminal mobile (MT) selon la revendication 26, dans lequel :
ledit moyen d'authentification (MT-AM) transfère lesdites informations d'authentification reçues (AI) audit noeud d'accès (AN).

28. Terminal mobile (MT) selon les revendications 25 et 26, dans lequel :
ledit terminal mobile (MT) comprend un compteur de temps (TMR) et si, après ledit envoi dudit message de demande d'informations d'authentification (AI-RQST), aucune information d'authentification (AI) n'est reçue dudit dispositif d'authentification de réseau (SSD), un moyen d'interruption (MT-IM) dudit terminal mobile (MT) ferme ladite connexion de communication radio sans fil établie (WCC) entre ledit terminal mobile (MT) et ledit noeud d'accès (AN).

29. Terminal mobile (MT) selon la revendication 25, dans lequel :
ledit terminal mobile (MT) comprend un moyen de répétition automatique (MT-AUTO) pour répéter automatiquement une tentative d'établissement après un intervalle de temps prédéterminé.

30. Terminal mobile (MT) selon la revendication 29, dans lequel :
ledit terminal mobile (MT) comprend un compteur (MT-CNT) qui compte le nombre de tentatives répétées pour établir une connexion par ledit moyen d'établissement (MT-SET), un moyen d'inhibition (MT-INHB) inhibant d'autres demandes d'établissement après un nombre prédéterminé (N) de tentatives.

31. Terminal mobile (MT) selon la revendication 24, dans lequel :
un moyen de sélection de clé secrète (MT-SEL) sélectionne une clé secrète (CK) utilisée pour la connexion de communication sans fil (WCC).

32. Réseau de communication sans fil (WATM), comprenant au moins un terminal mobile (MT) selon une ou plusieurs des revendications 24 à 31, au moins un noeud d'accès (AN) selon une ou plusieurs des revendications 15 à 23 et un moyen d'échange (EX) pour établir des connexions de communication radio sans fil (WCC) entre ledit au moins un terminal mobile (MT) et ledit au moins un noeud d'accès (AN).

33. Réseau de communication sans fil (WATM), selon la revendication 32, dans lequel
audit réseau de communication radio sans fil (WATM) est connecté un réseau fixe (FN) non-ATM fournissant des fonctions et des services à une pluralité d'abonnés (SS) au réseau fixe, dans lequel ledit terminal mobile (MT) accède auxdites fonctions et auxdits services par l'intermédiaire de ladite connexion de communication radio sans fil (WCC) établie entre ledit terminal mobile (MT) et ledit noeud d'accès (AN).

34. Procédé selon la revendication 4, dans lequel:
lesdites informations d'authentification (AI) sont renvoyées audit terminal mobile (MT) par l'intermédiaire de ladite connexion de communication sécurisée établie (WCC).

35. Dispositif selon la revendication 12, dans lequel :
ledit moyen de transmission (TR) renvoie lesdites informations d'authentification audit terminal mobile (MT) par l'intermédiaire de ladite connexion de communication sécurisée établie (WCC).

36. Noeud d'accès (AN) selon la revendication 16, dans lequel:
un moyen de transmission (TR) dudit noeud d'accès (AN) renvoie lesdites informations d'authentification audit terminal mobile (MT) par l'intermédiaire de ladite connexion de communication sécurisée établie (WCC).

37. Terminal mobile (MT) selon la revendication 26, dans lequel :
ledit moyen de réception d'informations d'authentification (MT-RM) reçoit lesdites informations d'authentification (AI) par l'intermédiaire de ladite connexion de communication sécurisée (WCC) établie entre ledit noeud d'accès (AN) et ledit terminal mobile (MT).

38. Terminal mobile (MT) selon la revendication 27, dans lequel :
ledit moyen d'authentification (MT-AM) transfère lesdites informations d'authentification (AI) par l'intermédiaire de ladite connexion de communication sécurisée (WCC) établie entre ledit noeud d'accès (AN) et ledit terminal mobile (MT) vis-à-vis dudit noeud d'accès (AN).
